# EUROPÄISCHE PATENTSCHRIFT

(11) **EP 0 491 817 B1**
(45) Veröffentlichungstag und Bekanntmachung des Hinweises auf die Patenterteilung: **03.05.1995**
(21) Anmeldenummer: 90914150.9
(22) Anmeldetag: 05.09.1990
(51) Int. Cl.: F16D 57/04

(54) **VORRICHTUNG ZUR REDUZIERUNG VON LEERLAUFVERLUSTEN BEI HYDRODYNAMISCHEN BREMSEN**
DEVICE FOR REDUCING THE IDLING LOSSES IN HYDRODYNAMIC BRAKES
DISPOSITIF POUR REDUIRE LES PERTES AU RALENTI DANS DES FREINS HYDRODYNAMIQUES

(30) Priorität: 08.09.1989 DE 3929978
(43) Veröffentlichungstag der Anmeldung: 01.07.1992
(73) Patentinhaber: ZF FRIEDRICHSHAFEN Aktiengesellschaft, 88038 Friedrichshafen (DE)
(72) Erfinder: HEINZELMANN, Karl-Fritz, D-7996 Meckenbeuren (DE); ECKERT, Harald, D-7994 Langenargen (DE); OEXL, Hans-Jürgen, D-7750 Konstanz (DE)
(86) Internationale Anmeldenummer: EP9001486
(87) Internationale Veröffentlichungsnummer: WO9103661

(56) Entgegenhaltungen:
- DE-A- 2 209 446
- DE-A- 2 509 005
- DE-A- 2 716 126
- DE-A- 3 207 634
- DE-B- 1 209 145
- DE-B- 2 605 229
- GB-A- 1 138 622
- US-A- 3 091 980

## Beschreibung

Die Erfindung betrifft eine hydrodynamische Bremse (Retarder), bei der zur Verminderung der Ventilationsverluste veränderliche Strömungshindernisse zwischen Rotor und Stator angeordnet sind, die im Leerlaufbetrieb bei ölentleerter Bremse im Bereich des Außendurchmessers beider Torusräume als ringartige Trennwand wirken und von radial außen her den gemeinsamen Torusraum verkleinern und im Bremsbetrieb bei ölgefüllter Bremse auf die äußere Toruskontur bzw. hinter diese zurückgezogen sind.

Aus der DE-B-26 05 229 ist eine solche Vorrichtung zur Verhinderung von Ventilationsverlusten bei nicht gefüllter Bremse bekannt. In dieser Schrift wird ein Rotor mit zugehörigem Torusraum und ein Stator mit zugehörigem Torusraum beschrieben, die einen gemeinsamen Torusraum bilden. Im äußeren Bereich dieses gemeinsamen Torusraumes ist ein über Betätigungseinrichtungen verstellbares Strömungshindernis in Form eines elastisch federnden Ringes mit etwa rechteckförmigem Querschnitt angeordnet. Im Leerlaufbetrieb bei ölentleerter Bremse wirkt der Ring als Trennwand und verkleinert von radial außen her den gemeinsamen Torusraum. Im Bremsbetrieb bei ölgefüllter Bremse ist der Ring auf die äußere Toruskontur bzw. hinter diese zurückgezogen. Diese Vorrichtung ist einfach im Aufbau, hat sich aber dennoch nicht durchsetzen können, weil die Breite des elastisch federnden Ringes stark begrenzt ist und deshalb die Reduzierung der Verluste im Leerlaufbetrieb nicht ausreichend ist.

Es ist deshalb Aufgabe der Erfindung, eine Vorrichtung nach dem Oberbegriff von Anspruch 1 so weiterzuentwickeln, daß bei einem einfachen Aufbau der Vorrichtung der Strömungsquerschnitt zwischen dem Rotor und Stator stärker gestört wird und die Reduzierung der Strömungsverluste erhöht werden kann.

Diese Aufgabe wird mit den kennzeichnenden Merkmalen vom Anspruch 1 erfüllt. Über z. B. winkelförmige Strömungshindernisse, die auf dem gesamten Umfang der Torusräume angeordnet sind, ist es möglich, die von radial außen in den Torusraum hineinragenden ringförmigen Schenkel in radialer Richtung breiter zu gestalten, so daß der verbleibende gemeinsame Torusraum stark verringert ist. Die z. B. winkelförmige Gestaltung der Strömungshindernisse gewährleistet eine gute Führung und exakte Anschläge in der radial äußeren und radial inneren Endstellung. Die Betätigungseinrichtungen bei mehreren auf den Umfang verteilten Strömungshindernissen können dabei zwischen diesen direkt in einer Umfangslücke oder parallel zu einer Umfangslücke angeordnet sein.

Ist nur ein auf den gesamten Umfang sich erstreckendes Strömungshindernis mit einer Umfangslücke angeordnet, ist die Elastizität zwischen der äußeren und inneren Endstellung über Schlitze, die auf den ringartigen radial verlaufenden Schenkel des Strömungshindernisses beschränkt sind, zu erzielen. Dabei ist es möglich, diese Schlitze auf den gesamten Umfang gleichmäßig zu verteilen. Es ist aber auch denkbar, daß im Bereich der Umfangslücke und dieser gegenüber einige Schlitze weggelassen werden können, um eine in diesem Bereich wirksame Ringsteifigkeit zu erzielen. Die Gestaltung der Schlitze kann so optimiert werden, daß in der radial inneren Stellung bis auf eine geringfügige Umfangslücke am offenen Ring dieser ansonsten geschlossen ist. Da der nach radial innen ragende Schenkel des Strömungshindernisses in der radial äußeren Endstellung hinter dem Torusraum zurücksteht, wirken die Schlitze in dieser Stellung nicht negativ. Besonders vorteilhaft ist bei der Anordnung von nur einem Strömungshindernis, daß bis auf die Umfangslücke sich dieses auf den gesamten Umfang der Strömungsbremse erstreckt. Die Anordnung der Betätigungseinrichtung im Bereich der Umfangslücke in Form von nur einer Kolben-Zylinder-Einheit ist ebenfalls vorteilhaft. Eine weiterhin besonders einfache Gestaltung ergibt sich, wenn die beiden Enden des offenen z. B. winkelförmigen Strömungshindernisses mit je einem Kolben über einen Mitnehmer und eine Mitnehmereinrichtung im Kolben verbunden sind, wobei in einfacher Weise die Mittelstellung der Kolben über Federn und die äußere Endstellung derselben über einen zwischen den Kolben liegenden befüllten Druckraum erzielt wird. Mit dieser einfachen Anordnung wird die Reduzierung der Verluste in der radial inneren Stellung über die durch die Federn bewirkte innere Stellung der Kolben erzielt, während die nicht wirksame Stellung zur Reduzierung von Leerlaufverlusten, verbunden mit der radial äußeren Stellung des Strömungshindernisses über den Druck im Druckraum, der die Kolben gegen den Druck einer Feder nach außen verschiebt, erzielt wird.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Weitere Einzelheiten der Erfindung werden anhand von Zeichnungen und Ausführungsbeispielen erläutert. Es zeigen:
- Fig. 1: einen Schnitt durch eine hydrodynamische Bremse mit einem einteiligen Strömungshindernis und einer Betätigungseinrichtung dafür in der Wirkstellung;
- Fig. 2: einen Querschnitt nach Fig. 1;
- Fig. 3: einen Schnitt nach Fig. 1 mit den versenkten Strömungshindernis in der Bremsstellung;
- Fig. 4: einen Querschnitt nach Fig. 3.

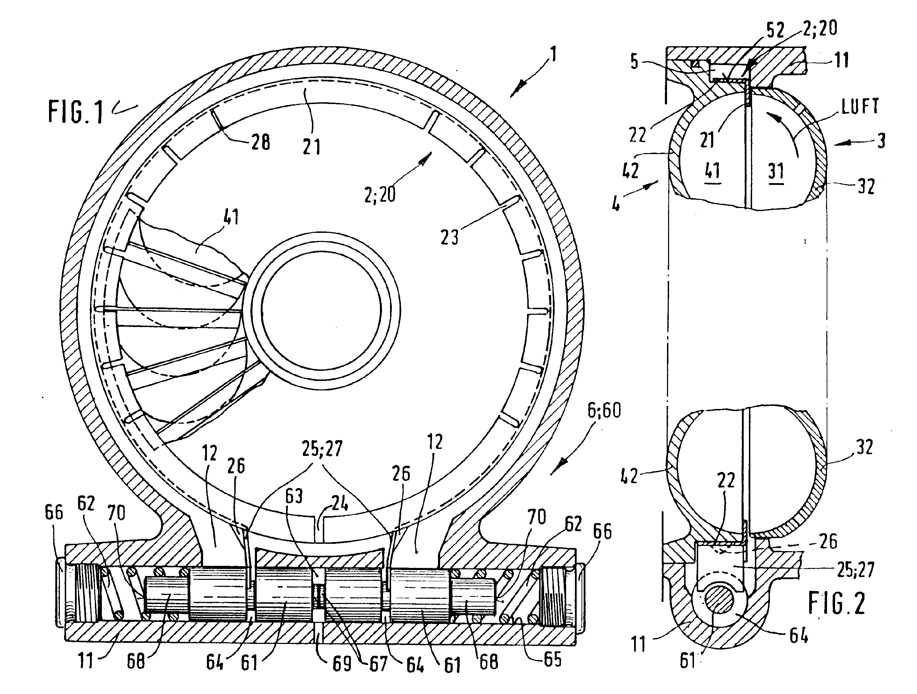

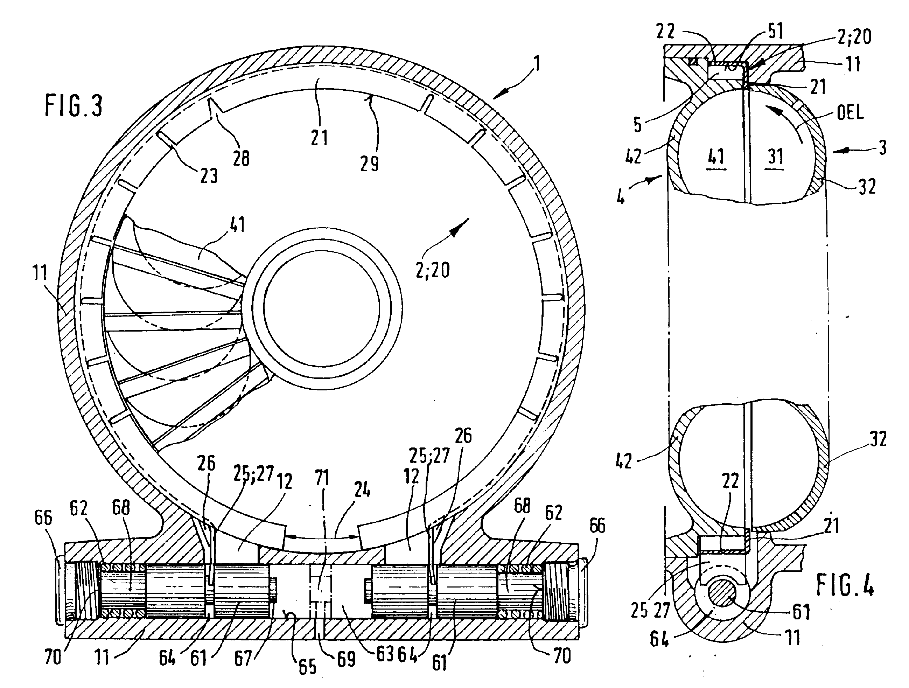

Die hydrodynamischen Bremse - Retarder - ist in Fig.1 so geschnitten, daß der Stator-Torusraum 41 mit dem Strömungshindernis 2, 20 sichtbar ist. Das Strömungshindernis 20 ist dabei einteilig und überdeckt, bis auf die Umfangslücke 24, den gesamten äußeren Bereich des Torusraumes in der Wirkstellung, in der die Leerlaufverluste der hydrodynamischen Bremse, also in der Phase, in der sie nicht mit Öl befüllt ist, reduziert werden. Neben der einteiligen Ausführung vom Strömungshindernis 20 sind auch Lösungen denkbar mit geteilten Strömungshindernissen, z. B. zwei oder vier Segmenten, die jeweils mit Betätigungseinrichtungen versehen oder verbunden sind. Nach Fig. 1 der einteiligen Ausführung vom Strömungshindernis ragt ein sich in radialer Richtung erstreckende ringförmige Schenkel 21 in den Torusraum hinein, wobei die Elastizität dieses ringförmigen Schenkels 21 über Schlitze 23 erzielt wird. Diese können gleichmäßig am Umfang verteilt sein, wobei es auch möglich ist, die Schlitze im Bereich der Umfangslücke 24 und radial gegenüber in einem mehr oder minder größeren Bereich entbehrlich zu machen. Insbesondere dürfen zwischen dem Mitnehmer 25 und der Umfangslücke 24 keine Schlitze angebracht sein. Das Gehäuse 11 der hydrodynamischen Bremse 1 ist an einer Umfangsseite der hydrodynamischen Bremse fußartig erweitert zur Aufnahme einer Bohrung 65 für die Kolben-Zylinder-Einheit 60. In dieser werden zwei Kolben 61 aufgenommen, die über Federn 62 in die Mittelstellung gedrückt werden. Die Abstützung der Federn erfolgt dabei über Verschlußschrauben 66. Infolge von Andrehungen 67 an den Kolben 61 oder einem in der Mitte der Bohrung angeordneten Anschlag 71 entsteht zwischen diesen beiden Kolben ein Ringraum 63, der als Druckraum wirkt und über den Kanal 69 mit einer Druckmittelquelle verbunden ist. Die Kolben haben nach außen hin noch eine längere Andrehung 68, auf denen die Federn 62 aufgenommen werden. Über den Anschlag 70 wird der über Druckmittel betätigte Hub der Kolben an den Verschlußschrauben 66 begrenzt. Etwa im mittleren Bereich von der Längserstreckung des Kolbens ist noch eine Mitnahmeeinrichtung 64 in Form einer ringförmigen Aussparung angeordnet, in die die Mitnehmer 25 des einteiligen Strömungshindernisses eingreifen. Der Mitnehmer 25 ist in diesem Beispiel als abgebogener Schenkel 27 des sich in axialer Richtung ersteckenden zylinderförmigen Schenkels 22 gebildet, wobei eine Versteifung 26 die Formstabilität dieses abgebogenen Schenkels 27 zum Strömungshindernis 20 gewährleistet. Das gemeinsame Gehäuse 11 der hydrodynamischen Bremse 1 mit der Betätigungseinrichtung 6 - Kolben-Zylinder-Einheit 60 - hat einen Durchbruch 12, so daß sowohl in der inneren Stellung (Fig. 1) wie auch in der äußeren Stellung (Fig. 3) die freie Beweglichkeit des Mitnehmers 25 gewährleistet ist.

In den Querschnitt nach Fig. 2 ist mit 11 das Gehäuse der hydrodynamischen Bremse und mit 42 das Gehäuse des Stators 4 bezeichnet. Das Strömungshindernis 2, 20 ist winkelartig gestaltet und ragt mit einem ringförmigen Schenkel 21 radial nach innen und trennt im äußeren Bereich die beiden Torusräume 41, 31 des Stators 4 und des Rotors 3. Der zweite sich in axialer Richtung erstreckende zylinderförmige Schenkel 22 liegt in der Stellung des Strömungshindernisses 2, 20 nach Fig. 1 an der radial inneren Wand 52 der Kammer 5 an, wobei die Kammer 5 vom Gehäuse des Stators 42 und dem Gehäuse der hydrodynamischen Bremse 11 gebildet wird. Im unteren Querschnitt zur Fig. 1 ist noch der abgebogene Schenkel 27 des Mitnehmers 25 vom zylinderförmigen Schenkel 22 zu erkennen, der in die Mitnehmereinrichtung - ringförmige Aussparung 64 des Kolbens 61 - eingreift. Weiter ist die Verstärkung 26 am Mitnehmer 25 erkennbar. Die Fig. 3 ist identisch mit Fig. 1, nur daß die Betätigungseinrichtung über den Druck im Druckraum 63 die Kolben 61 entgegen dem Federdruck der Federn 62 bis zum Anschlag 70 nach außen gedrückt worden sind. Damit hat die Mitnahmeeinrichtung 64 im Kolben 61 den Mitnehmer 25 am Strömungshindernis 22 in die radiale äußere Stellung verstellt, in der die Umfangslücke entsprechend vergrößert und das Strömungshindernis 2, 20 nicht mehr in den gemeinsamen Torusraum 41, 31 von Stator und Rotor 4, 3 hineinragt. Wie in Fig. 4 dargestellt, liegt dabei der Schenkel 22 des Strömungshindernisses 20 an der radial äußeren Wand 51 der Kammer 5 an. Die Schlitze 23 sind in dieser gespreizten Stellung des Strömungshindernisses am weitesten geöffnet, während sie in der radial inneren Stellung des Strömungshindernisses, wie der Schlitz 28 (Fig. 1) zeigt, nahezu geschlossen sind. Die Form der Schlitze ist abhängig von dem Umfangsunterschied zwischen radial innerer und radial äußerer Stellung des Strömungshindernisses und der Anzahl der auf dem Umfang verteilt vorgesehenen Schlitze. Die Vorrichtung zur Reduzierung von Leerlaufverlusten wirkt wie folgt: Im Bremsbetrieb (Fig. 3 und 4), in dem die Torusräume 31 des Rotors und 41 des Stators mit Öl befüllt sind, wird über den Kanal 69 Druckmittel in den Druckraum 63 gefördert und die Kolben 61 werden entgegen dem Druck der Federn 62 nach außen bis an die Verschlußschrauben 66 verschoben, so daß der Anschlag 70 der Kolben 61 an den Verschlußschrauben anliegt. Über die Mitnahmeeinrichtung 64 werden die Mitnehmer 25 vom Strömungshindernis 2, 20 mitgenommen, und das Strömungshindernis wird so gespreizt, daß die vordere Kante 29 des nach radial innen ragenden ringförmigen Schenkels 21 vom Strömungshindernis 20 hinter dem gemeinsamen Torusraum 41, 31 des Stators und Rotor 4, 3 zurücksteht. Der sich in axialer Richtung erstreckende zylinderförmige Schenkel 22 des Strömungshindernisses 20 liegt dabei an der radial äußeren Wand 51 der Kammer 5 an und begrenzt auch dort die Spreizbewegung. Sind die Torusräume 31, 41 vom Rotor und Stator entlüftet (Fig. 1 und 2), wirkt auch kein Druck über den Kanal 69, so daß über die Federn 62 die beiden Kolben 61 nach innen bewegt werden. Über die Mitnahmeeinrichtung 64 werden die Mitnehmer 25 gleichfalls nach innen bewegt, so daß, wie in Fig. 1 dargestellt, die Umfangslücke 24 nahezu geschlossen ist. In dieser Stellung ragt das Strömungshindernis in den gemeinsamen Torusraum 31, 41 von Rotor und Stator 3 und 4 hinein, und die Luftzirkulation zwischen Rotor 3 und Stator 4 wird im äußeren Bereich der Torusräume unterbrochen. Damit wird der Leerlaufverlust innerhalb der hydrodynamischen Bremse reduziert. Mit der Breite vom ringförmigen Schenkel, der nach radial innen zwischen die Torusräume hineinragt, kann die Reduzierung des Leerlaufverlustes unterschiedlich gestaltet werden.

Die Erfindung ist nicht auf die in Fig. 1 bis 4 dargestellte Ausführung beschränkt. So können z. B. mehrere Strömungshindernisse am Umfang verteilt angeordnet sein, und die radiale Betätigung der Strömungshindernisse kann von mehreren Betätigungseinrichtungen bewirkt werden. Die Betätigungseinrichtungen können, wie dargestellt, über Druckmittel, aber auch über Temperaturschwankungen zwischen der hydrodynamischen Bremse im Bremsbetrieb und im entleerten Betrieb bewirkt werden. Die Strömungshindernisse können im Querschnitt jede Form haben, wenn nur ein Schenkel in der Wirkstellung zwischen die beiden Torusräume hineinragt.

Der Ringraum 63 zwischen den beiden Kolben 61 kann auch über einen ringartigen Anschlag in der Mitte der Bohrung 65 gebildet werden (Fig. 3).

### Bezugszeichen

- 1: hydrodynamische Bremse/Retarder
- 11: Gehäuse
- 12: Durchbruch
- 2, 20: Strömungshindernis/Strömungshindernisse
- 21: nach radial innen ragender ringförmiger Schenkel
- 22: sich in axialer Richtung erstreckender zylinderförmiger Schenkel
- 23: Schlitze
- 24: Umfangslücke
- 25: Mitnehmer
- 26: Versteifung
- 27: abgebogener Schenkel
- 28: Schlitze
- 29: vordere Kante des Schenkels 21
- 3: Rotor
- 31: Torusraum
- 32: Rotorgehäuse
- 4: Stator
- 41: Torusraum
- 42: Statorgehäuse
- 5: Kammer
- 51: radial äußere Wand
- 52: radial innere Wand
- 6: Betätigungseinrichtung
- 60: Kolben-Zylinder-Einheit
- 61: Kolben
- 62: Feder
- 63: Druckraum/Ringraum
- 64: Mitnahmeeinrichtung/ringförmige Aussparung
- 65: durchgängige Bohrung
- 66: Verschlußschrauben
- 67: Andrehung
- 68: längere Andrehung
- 69: Kanal
- 70: Anschlag
- 71: ringartiger Anschlag

## Patentansprüche

1. Hydrodynamische Bremse (1), bei der zur Vermeidung von Ventilationsverlusten zwischen einem Rotor (3) mit zugehörigem Torusraum (31) und einem Stator (4) mit zugehörigem Torusraum (41) im äußeren Bereich eines aus den Torusräumen (31, 41) gebildeten gemeinsamen Torusraumes diesen abdeckend ein oder mehrere über Betätigungseinrichtungen (6) verstellbare Strömungshindernisse (2, 20) angeordnet sind, die im Leerlaufbetrieb bei ölentleerter Bremse im Bereich des Außendurchmessers beider Torusräume (31, 41) als ringartige Trennwand wirken und von radial außen her den gemeinsamen Torusraum verkleinern und im Bremsbetrieb bei ölgefüllter Bremse auf die äußere Toruskontur bzw. hinter diese zurückgezogen sind, dadurch **gekennzeichnet**, daß das Strömungshindernis (20) oder die Strömungshindernisse (2) im Querschnitt rechtwinklig ausgebildet sind, wobei ein radial nach innen ragender, ringförmiger Schenkel (21) als Trennwand zwischen den Torusräumen (31, 41) angeordnet ist und ein sich in axialer Richtung erstreckender Schenkel (22), entsprechend zweier Endstellungen, einerseits im nicht befüllten Zustand der Bremse radial innen und andererseits im befüllten Zustand radial außen an jeweils einer Wand (51, 52) einer Kammer (5) anliegt, die sich radial außerhalb der Torusräume (31, 41) von Rotor (3) und Stator (4) befindet.

2. Hydrodynamische Bremse nach Anspruch 1, dadurch **gekennzeichnet**, daß ein den gesamten Umfang der Torusräume (31, 41) im radial äußeren Bereich überdeckendes im Querschnitt winkelförmiges Strömungshindernis (20) angeordnet ist, wobei die zu erzielende Elastizität zwischen dem äußeren und inneren Anschlag des Strömungshindernisses (20) und der damit verbundenen Durchmesserdifferenzen über am Umfang verteilte Schlitze (23), die am nach innen ragenden ringförmigen Schenkel (21) des Strömungshindernisses (20) angeordnet sind, erzielt werden.

3. Hydrodynamische Bremse nach Anspruch 2, dadurch **gekennzeichnet**, daß die Schlitze (23, 28) im nach radial innen ragenden Schenkel (21) vom Strömungshindernis (20) so gestaltet sind, daß sie in der radial inneren Stellung vom Strömungshindernis nahezu geschlossen oder ganz geschlossen sind, so daß der nach radial innen ragende ringförmige Schenkel (21), der zwischen beiden Torusräumen (31, 41) angeordnet ist, im Prinzip keine Öffnung hat.

4. Hydrodynamische Bremse nach Anspruch 3, dadurch **gekennzeichnet**, daß die radial innere und äußere Endstellung vom winkelförmigen Strömungshindernis (20) über eine Kolben-Zylinder-Einheit (60) erzielt wird.

5. hydrodynamische Bremse nach Anspruch 4, dadurch **gekennzeichnet**, daß das Gehäuse der Kolben-Zylinder-Einheit (60) mit dem Gehäuse der hydrodynamischen Bremse (11) verbunden ist.

6. Hydrodynamische Bremse nach Anspruch 5, dadurch **gekennzeichnet**,
- daß in der Kolben-Zylinder-Einheit (60) zwei über Federkraft (Feder 62) zur Mitte zu gedrückte Kolben (61) angeordnet sind,
- daß zwischen den Kolben (61) ein Druckraum/ Ringraum (63) angeordnet ist,
- daß jeder Kolben (61) eine Mitnahmeeinrichtung (64) hat,
- daß im Bereich der Umfangslücke (24) vom winkel- und ringförmigen Strömungshindernis (20) beidseitig Mitnehmer (25) angeordnet sind, die in die Mitnahmeeinrichtung (64) je eines Kolbens (61) der Zylinder-Kolben-Einrichtung (60) eingreifen.

7. Hydrodynamische Bremse nach Anspruch 6, dadurch **gekennzeichnet**,
- daß die Mitnehmer (25) im Bereich der Umfangslücke (24), die durch das Trennen des winkel- und ringförmigen Strömungshindernisses (20) entstanden sind, von dem abgebogenen ansonsten zylinderförmigen Schenkel (22) des winkel- und ringförmigen Strömungshindernisses (20) gebildet wird;
- daß der abgebogene Schenkel (27) über eine Versteifung (26) in einer definierten Lage stabilisiert wird.

8. Hydrodynamische Bremse nach Anspruch 7, dadurch **gekennzeichnet**,
- daß die Kolben-Zylinder-Einheit (60) ein fußähnlich gestaltetes Gehäuse (11) hat, in dem eine Bohrung (65) angeordnet ist;
- daß die Bohrung (65) nach außen über zwei Verschlußschrauben (66) abgeschlossen ist;
- daß im inneren Bereich dieser Bohrung zwei Kolben (61) angeordnet sind, die über Andrehungen (67) an jedem Kolben einen Ringraum als zwischen den Kolben liegender Druckraum (63) bilden oder der Druckraum über einen in der Mitte der Bohrung angeordneten Anschlag (71) gebildet wird;
- daß die Mitnahmeeinrichtung (64) im jeweiligen Kolben (61) eine radial außen angeordnete ringförmige Aussparung (64) ist;
- daß zwischen den Verschlußschrauben (66) und dem vorrangig mit einer längeren Andrehung (68) versehenen Kolben (61) je eine Druckfeder (62) angeordnet ist, die beide Kolben (61) in der Mittellage aneinander oder an den Anschlag (71) drückt, wodurch der mit Druckmittel nicht befüllte Ringraum (63) gebildet wird;
- daß im Gehäuse (11) zwischen der Kammer (5) und der Bohrung (65) der Kolben-Zylinder-Einheit (60) je ein Durchbruch (12) für die Mitnehmer (25) vom Strömungshindernis (20) angeordnet ist und daß diese Durchbrüche (12) sowohl in der Mittelstellung der Kolben (61) wie auch in der über einen Betätigungsdruck im Druckraum (63) bewirkten äußeren Stellung derselben von diesen Kolben (61) verschlossen wird.

9. Hydrodynamische Bremse nach Anspruch 8, dadurch **gekennzeichnet**, daß in der über die Federn (62) bewirkten inneren Stellung der Kolben (61) über die Mitnahmeeinrichtung (64) derselben und über die Mitnehmer (25) am Strömungshindernis (20) dieses mit dem zylinderförmigen Schenkel (22) an der radial innen liegenden Wand (52) der Kammer (5) anliegt und in dieser Stellung der radial nach innen ragende ringförmige Schenkel (21) vom Strömungshindernis (20) die Torusräume (31, 41) im radial äußeren Bereich trennt und in Form einer Trennwand den gemeinsamen Torusraum (31, 41) im inneren Bereich im Durchmesser verkleinert.

10. Hydrodynamische Bremse nach Anspruch 8, dadurch **gekennzeichnet**, daß in der über den Druck im Druckraum (63) bewirkten äußeren Stellung der Kolben (61) über die Mitnahmeeinrichtung (64) derselben und über die Mitnehmer (25) vom Strömungshindernis (20) dieses mit dem zylinderförmigen Schenkel (22) an der radial außen liegenden Wand (51) der Kammer (5) anliegt und in dieser Stellung der radial nach innen ragende ringförmige Schenkel (21) vom Strömungshindernis (20) mit seiner vorderen Kante (29) hinter den gemeinsamen Torusräumen (31, 41) zurücksteht.

## Claims

1. Hydrodynamic brake (1) with adjustable baffles (2, 20) to reduce ventilation losses, said baffles being situated between a rotor (3) with toroidal chamber (31) and a stator (4) with toroidal chamber (41), said toroidal chambers (31, 41) forming a common toroidal chamber in the outer region and covering one or more baffles (2, 20) adjustable by actuation devices (6), said baffles acting as an annular separating wall around the periphery of both toroidal chambers (31, 41) during idling when the oil has been emptied from the brake and projecting radially outward to reduce the area of the common toroidal chamber and, during brake operation when the brake is filled with oil, being located on or retarded behind the external periphery of the toroidal chamber,
**characterized** in that,
the baffle (20) or baffles (2) are rectangular in cross-section, whereby the radially-inward projecting annular leg (21) is arranged as a separating wall between the toroidal chambers (31, 41) and a leg (22) which projects in an axial direction has two possible settings, firstly radially inward when brake is not filled and secondly radially outward when brake is filled, both legs being located on a wall (51, 52) of a chamber (5) which is radially located outside the toroidal chambers (31, 41) of the rotor (3) and stator (4).

2. Hydrodynamic brake, as claimed in claim 1,
**characterized** in that a baffle (20) with angular cross-section and covering all toroidal chambers (31, 41) in a radial outward direction is included, whereby the desired elasticity between the external and internal stop of the baffle (20) and the resultant differences in diameter are obtained via slits (23) around the periphery arranged on the annular leg (21) of the radially-inward projecting baffle (20).

3. Hydrodynamic brake as claimed in claim 2,
**characterized** in that the slits (23, 28) in the leg (21) of the radially-inward projecting baffle (20) are arranged in such a way that they are nearly or completely closed when the baffle is projecting radially inward, meaning that the radially-inward projecting annular leg (21) located between the two toroidal chambers (31, 41) has no opening in principle.

4. Hydrodynamic brake as claimed in claim 3,
**characterized** in that the inward and outward radial positions of the annular baffle (20) are obtained via a piston-cylinder unit (60).

5. Hydrodynamic brake as claimed in claim 4
**characterized** in that the housing of the piston-cylinder unit (60) is connected to the housing of the hydrodynamic brake (11).

6. Hydrodynamic brake as claimed in claim 5
**characterized** in that
- two cylinders (61) which are pushed towards the center by spring force (spring 62) are located in the piston-cylinder unit (60),
- a pressure chamber/annular chamber (63) is located between the pistons (61),
- each piston (61) has an engagement device (64),
- driver devices (25) are located on both sides of the peripheral gap (24) between the angular and annular baffles (20), said driving devices each engaging with the engaging device (64) of a piston (61) in the piston-cylinder unit (60).

7. Hydrodynamic brake as claimed in claim 6
**characterized** in that
- the driver device (25) in the peripheral gap (24) section is formed by the separation of the angular and annular baffles (20) following bending of the otherwise annular leg (22) of the angular and annular baffles (20),
- the bent leg (27) is stabilized in a fixed position by a reinforcement device (26).

8. Hydrodynamic brake as claimed in claim 7
**characterized** in that
- the piston-cylinder unit (60) has a housing (11) similar in shape to a foot and with a bore (65),
- the bore (65) is closed to the outside by two plugs (66),
- the bore has two pistons (61) on the inside, said pistons forming a circular area above the thread (67) on each piston, said area serving as a pressure space (63) between the pistons or, the pressure space is formed by a stop (71) located in the middle of the bore,
- the engaging device (64) in each piston (61) is a radially-inward projecting, annular recess (64),
- a pressure spring (62) is located between each locking screw (66) and piston (61), most of said pistons having a longer thread (68) and said pressure springs pushing both pistons (61) together in the central area or pushing the stop (71) thereby forming the pressure-free space (63),
- openings (12) for the engaging device (25) from the baffle (20) are located between the chamber (5) and the bore (65) of the piston-cylinder unit (60), said openings (12) also being closed by these pistons (61) both when the piston is in its middle position and in its external position due to actuation pressure in the pressure space (63).

9. Hydrodynamic brake as claimed in claim 8
**characterized** in that when the springs (62) move the pistons (61) to their inner position, the baffle (20) is moved next to the annular leg (22) on the radially-inward located wall (52) of the chamber (5) via the engagement device (64) of the piston and the driver device (25) on the baffle (20), whereby the radially-inward projecting annular leg (21) from the baffle (20) separates the toroidal chambers (31, 41) in the radial outer region and acts as a separating wall to reduce the diameter of the complete toroidal chambers (31, 41) in the inner region.

10. Hydrodynamic brake as claimed in claim 9
**characterized** in that when the pressure in the pressure space (63) moves the piston (61) to its external position, the baffle (20) is moved next to the annular leg (22) on the radially-outward located wall (51) of the chamber (5) via the engagement device (64) of the piston and the driver device (25) on the baffle (20), whereby the front edge (29) of the radially-inward projecting annular leg (21) from the baffle (20) is located behind the common toroidal chambers (31, 41).

## Revendications

1. Frein hydrodynamique (1) dans lequel, pour éviter des pertes par ventilation entre un rotor (3) pourvu d'une chambre torique respective (31) et un stator (4) pourvu d'une chambre torique respective (41), un ou plusieurs obstacles à l'écoulement (2, 20), ajustables au moyen d'organes d'actionnement (6), sont disposés dans une zone extérieure d'une chambre torique commune composée desdites chambres toriques (31, 41) et couvrent cette zone, ledit obstacle ou lesdits obstacles, en régime à vide lorsque le frein est vide d'huile, servant de cloison annulaire dans la zone du diamètre extérieur des deux chambres toriques (31, 41) et réduisant la chambre torique commune radialement à partir de l'extérieur et, en régime de freinage lorsque le frein est rempli d'huile, étant en retrait sur ou derrière le contour extérieur de la chambre torique commune, **caractérisé** en ce que l'obstacle (20) ou les obstacles (2) à l'écoulement présentent une section transversale à angle droit, dont une aile annulaire (21) dirigée radialement vers l'intérieur forme une cloison entre les chambres toriques (31, 41) et dont une aile (22) s'étendant en direction axiale, dans deux positions extrêmes respectives, s' appuie contre une paroi respective (51, 52) d'une chambre (5) qui se trouve radialement à l'extérieur des chambres toriques (31, 41) du rotor (3) et du stator (4), ladite aile s'appuyant d'une part radialement vers l'intérieur dans un état non rempli du frein et d'autre part radialement vers l'extérieur dans l'état rempli.

2. Frein hydrodynamique selon la revendication 1, **caractérisé** en ce qu'un obstacle à l'écoulement (20) à section transversale en forme d'équerre est disposé de manière à couvrir toute la circonférence des chambres toriques (31, 41) dans la zone radiale extérieure, l'élasticité à obtenir entre les positions de butée extérieure et intérieure de l'obstacle à l'écoulement (20) et les différences de diamètre correspondantes étant obtenues au moyen de fentes (23) réparties sur la circonférence et ménagées dans l'aile annulaire (21) dirigée vers l'intérieur de l'obstacle à l'écoulement (20).

3. Frein hydrodynamique selon la revendication 2, **caractérisé** en ce que les fentes (23, 28) de l'aile dirigée radialement vers l'intérieur (21) de l'obstacle à l'écoulement (20) ont une configuration telle qu'elles sont presque fermées ou complètement fermées dans la position radiale intérieure de l'obstacle à l'écoulement, de sorte que l'aile annulaire (21) dirigée radialement vers l'intérieur et située entre les deux chambres toriques (31, 41) n'a en principe aucune ouverture.

4. Frein hydrodynamique selon la revendication 3, **caractérisé** en ce que les positions radiales extrêmes intérieure et extérieure de l'obstacle à l'écoulement en forme d'équerre (20) sont obtenues au moyen d'une unité à piston et cylindre (60).

5. Frein hydrodynamique selon la revendication 4, **caractérisé** en ce que le carter de l'unité à piston et cylindre (60) est fixé au carter du frein hydrodynamique (11).

6. Frein hydrodynamique selon la revendication 5, **caractérisé** en ce que :
- l'unité à piston et cylindre (60) contient deux pistons (61) qui sont poussés vers le milieu par des ressorts (62);
- une chambre de pression ou chambre annulaire (63) est disposée entre les pistons (61);
- chaque piston (61) est pourvu d'un organe d'entraînement (64);
- de chaque côté d'une brèche périphérique (24) de l'obstacle annulaire et en équerre (20), il est prévu des taquets d'entraînement (25) qui s'engagent respectivement dans les organes d'entraînement (64) des pistons (61) de l'unité à piston et cylindre (60).

7. Frein hydrodynamique selon la revendication 6, **caractérisé** en ce que :
- les taquets d'entraînement (25) situés à proximité de la brèche périphérique (24) et résultant de la coupure de l'obstacle annulaire et en équerre (20) sont formés par repliage de l'aile par ailleurs cylindrique (22) de l'obstacle annulaire et en équerre (20);
- la partie d'aile repliée (27) est stabilisée dans une position définie au moyen d'un raidisseur (26).

8. Frein hydrodynamique selon la revendication 7, **caractérisé** en ce que :
- l'unité à piston et cylindre (60) comporte un carter (11) de forme analogue à un pied et contenant un alésage (65);
- l'alésage (65) est fermé par rapport à l'extérieur au moyen de deux bouchons à vis (66);
- deux pistons (61) sont disposés dans la zone intérieure de cet alésage, une chambre de pression (63) située entre les pistons étant formée en chambre annulaire au moyen de parties tournées (67) sur chaque piston, ou au moyen d'une butée (71) disposée au milieu de l'alésage;
- sur chaque piston (61), l'organe d'entraînement (64) est un évidement annulaire (64) disposé radialement à l'extérieur;
- un ressort de compression (62) est disposé entre chaque bouchon à vis (66) et le piston correspondant (61), et pourvu de préférence d'une partie tournée allongée (68), lesdits ressorts poussant les deux pistons (61) en position médiane l'un contre l'autre ou contre la butée (71), pour former la chambre annulaire (63) non remplie de fluide sous pression;
- un passage (12) pour chaque taquet d' entraînement (25) de l'obstacle (20) est ménagé dans le carter (11) entre la chambre (5) et l'alésage (65) de l'unité à piston et cylindre (60) et chacun de ces passages (12) est obturé par le piston (61) aussi bien dans la position médiane des pistons (61) que dans la position extérieure de ceux-ci, produite par une pression d'actionnement dans la chambre de pression (63).

9. Frein hydrodynamique selon la revendication 8, **caractérisé** en ce que, dans la position intérieure des pistons (61) produite par les ressorts (62), l'obstacle à l'écoulement (20), entraîné par ses taquets d'entraînement (25) et les organes d'entraînement (64) des pistons, s'appuie par son aile cylindrique (22) contre la paroi radialement intérieure (52) de la chambre (5) et, dans cette position, l'aile annulaire dirigée radialement vers l'intérieur (21) de l'obstacle à l'écoulement (20) sépare les chambres toriques (31, 41) dans la zone radiale extérieure et, sous la forme d'une cloison, réduit le diamètre de la chambre torique commune (31, 41) dans la zone intérieure.

10. Frein hydrodynamique selon la revendication 8, **caractérisé** en ce que dans la position extérieure des pistons (61), produite par la pression dans la chambre de pression (63), l'obstacle à l'écoulement (20), entraîné par ses taquets (25) et les organes d'entraînement (64) des pistons, s'appuie par son aile cylindrique (22) contre la paroi radialement extérieure (51) de la chambre (5) et, dans cette position, le bord antérieur (29) de l'aile annulaire dirigée radialement vers l'intérieur (21) de l'obstacle à l'écoulement (20) se trouve en retrait par rapport aux chambres toriques communes (31, 41).
